# EUROPEAN PATENT APPLICATION

(11) **EP 4 607 644 A1**
(43) Date of publication of application: **27.08.2025**
(21) Application number: 23879002.6
(22) Date of filing: 11.10.2023
(51) Int. Cl.: H01M 10/0567, H01M 10/052, H01M 10/0569, H01M 10/0568

(54) **ELECTROLYTE SOLUTION OF LITHIUM-ION BATTERY AND LITHIUM SECONDARY BATTERY**

(30) Priority: 21.10.2022 CN 202211291032
(71) Applicant: Zhangjiagang Guotai-Huarong New Chemical Materials Co., Ltd, Suzhou, Jiangsu 215600 (CN)
(72) Inventor: CHEN, Li, Suzhou, Jiangsu 215600 (CN); WANG, Tingting, Suzhou, Jiangsu 215600 (CN); HUI, Yinyin, Suzhou, Jiangsu 215600 (CN); GAN, Chaolun, Suzhou, Jiangsu 215600 (CN)
(74) Representative: De Vries & Metman
(86) International application number: PCT/CN2023/123995
(87) International publication number: WO 2024/083011

(57) **Abstract**

An electrolyte solution of a lithium-ion battery and a lithium secondary battery. The electrolyte solution of a lithium-ion battery comprises an organic solvent, a lithium salt and an additive, wherein the organic solvent comprises fluorinated ethylene carbonate accounting for at least 5% of the total mass of the electrolyte solution, the additive comprises an additive A containing one or more compounds which have three or more carbon-carbon double bonds, and the electrolyte solution does not comprise a compound containing a sulfonyl group. The electrolyte solution of a lithium-ion battery is not only more environmentally friendly, but can also improve the swelling of the battery during the formation and high-temperature storage thereof, the discharge capacity of the battery, and the self-discharge performance of the battery under a high voltage.

## Description

### Technical Field

The present invention relates to the technical field of lithium-ion batteries and, in particular, to an electrolyte solution of a lithium-ion battery and a lithium secondary battery.

### Background

Compared with other batteries, lithium-ion batteries have the advantages of light weight, small size, high working voltage, high energy density, large output power, high charging efficiency, no memory effect, long cycle life and the like. However, with the gradual improvement of people's living requirements and the continuous development of electronic products, higher challenges are posed to the performance of lithium-ion batteries.

Common lithium-ion battery electrolyte solutions comprise sulfonyl-containing compounds (such as sulfonic esters, sultones, sulfates, sulfites, sulfones and sulfoxides) as additives. During the charging process of lithium-ion batteries, such additives can form a solid electrolyte interface film on an anode and effectively inhibit the decomposition reaction of the electrolyte solution. Therefore, the high-temperature storage performance of lithium-ion batteries has been significantly improved. However, the application of such compounds will involve environmental protection issues, and they have been banned or are ready to be banned in some countries and regions.

Since the sulfonyl-containing compounds have the foregoing defects, suitable alternatives are desired to suppress the swelling of batteries during formation and high-temperature storage, increase the discharge capacity of batteries, and improve the self-discharge performance of batteries at a high voltage.

### Summary of the Invention

An objective of the present disclosure is to provide a lithium battery electrolyte solution that is environmentally friendly, increases battery capacity and improves battery performance.

Another objective of the present disclosure is to provide a lithium-ion secondary battery using the foregoing electrolyte solution.

To solve the above technical problem, the present disclosure adopts the following technical solutions:
It is an objective of the present disclosure to provide an electrolyte solution of a lithium-ion battery, comprising an organic solvent, a lithium salt and an additive. The additive comprises an additive A, which is selected from the group consisting of substances shown in the following structural formulas and combinations thereof: 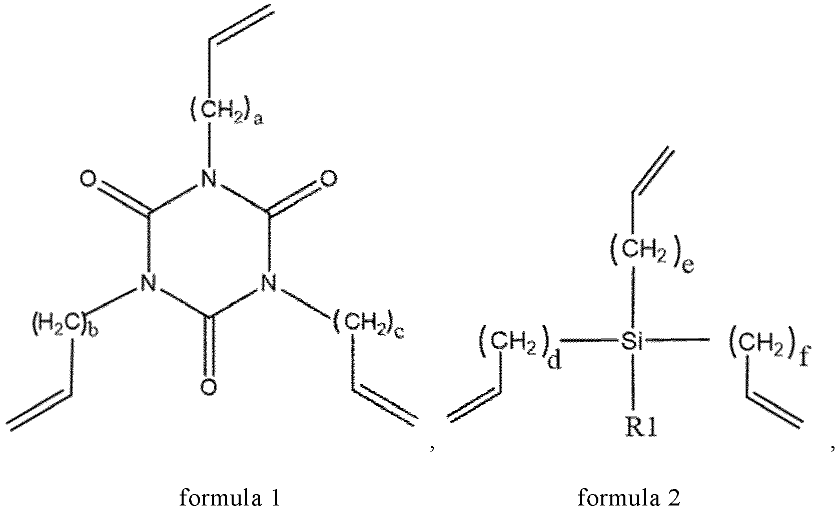 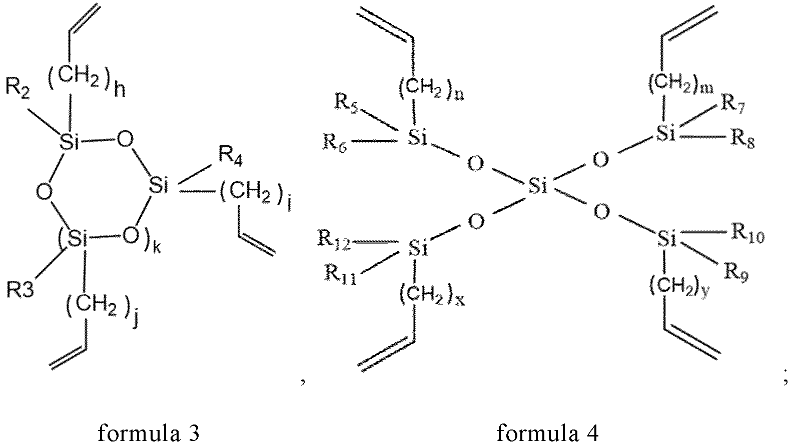
R₁ in formula 2 is an alkyl group with 1 to 3 carbon atoms or an alkenyl group with 2 to 4 carbon atoms, and R₂ to R₁₂ in formula 3 and formula 4 are alkyl groups with 1 to 3 carbon atoms; a to c in formula 1 are integers from 0 to 3, d to f in formula 2 are integers from 0 to 3, h to j in formula 3 are integers from 0 to 3, k in formula 3 is an integer from 1 to 5, and m, n, x, and y in formula 4 are integers from 0 to 3;
the organic solvent comprises fluoroethylene carbonate, the content of which is at least 5% of the total mass of the electrolyte solution;
the electrolyte solution does not comprise sulfonyl-containing compounds.

Specifically, the sulfonyl-containing compounds include but are not limited to compounds containing sulfonic esters, sultones, sulfates, sulfites, sulfones, and sulfoxides.

Specifically, the sulfonyl-containing compounds include but are not limited to 1,3-propane sultone, propenyl-1,3-sultone, methylene methane disulfonate, vinyl sulfate, vinyl sulfite, and sulfolane.

Preferably, R₁ in formula 2 is a methyl group, an ethyl group, a vinyl group, or a propenyl group; R₂ to R₁₂ in formulas 3 and 4 are methyl groups, ethyl groups or propyl groups; a to c in formula 1 are 0, 1 or 2; d to f in formula 2 are 0, 1 or 2; h to j in formula 3 are 0, 1 or 2; k in formula 3 is 1, 2 or 3; and m, n, x, and y in formula 4 are 0, 1 or 2.

In this application, "R₂ to R₁₂ are" means that R₂ to R₁₂ are each a certain group, but does not mean to limit that R₂ to R₁₂ are all the same. In fact, R₂, R₃, R₄, R₅, R₆, R₇, R₈, R₉, R₁₀, R₁₁, and R₁₂ may be the same or different. Similarly, "a to c are", "d to f are", "h to j are" and "m, n, x and y are" mean that a to c, d to f, h to j, and m, n, x and y are independent values, but do not mean to limit them to be the same.

According to some specific embodiments, the additive A is selected from the group consisting of substances shown in the following structural formulas and combinations thereof:

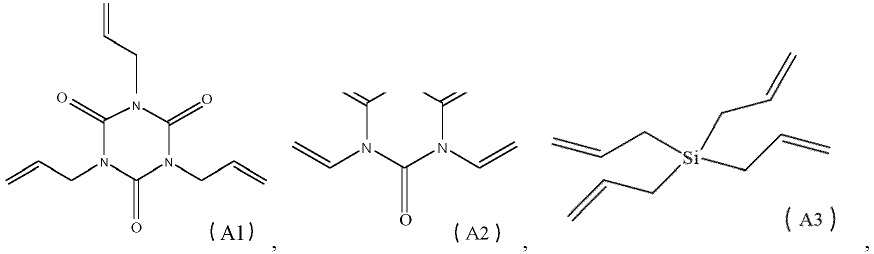

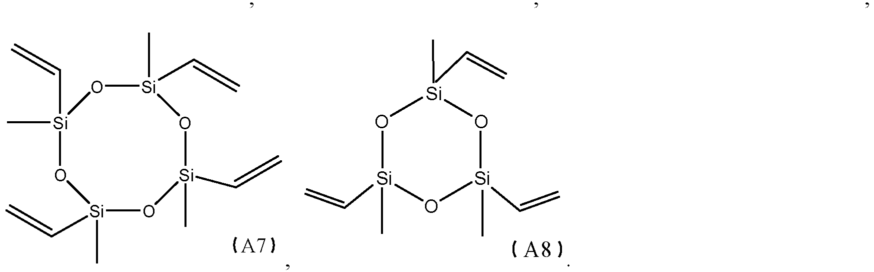

According to some specific embodiments, the content of the additive A is 0.5% to 2.0%, such as 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, and 2.0%, of the total mass of the electrolyte solution.

According to other specific embodiments, the content of the additive A is 1.0% to 2.0% of the total mass of the electrolyte solution.

According to some embodiments, the additive A is a combination of two or more of the substances shown in Formulas 1 to 4.

According to a specific and preferred embodiment, the additive A is A1 accounting for 1% of the total mass of the electrolyte solution, A4 accounting for 0.5% of the total mass of the electrolyte solution, and A6 accounting for 0.5% of the total mass of the electrolyte solution.

According to some embodiments, the additive also comprises other additive. The other additive includes but is not limited to one or more of a cyclic carbonate having double bonds, a cyclic carbonate containing halogen, an acid anhydride, a benzene compound, a fluorobenzene compound, a nitrile compound, a phosphate ester, a phosphite ester, a boron compound, an amine compound, a silicon-containing compound, and a heterocyclic compound.

Further, the content of the other additive is 0.1% to 5% of the total mass of the electrolyte solution.

More further, the content of the other additive is 1% to 3% of the total mass of the electrolyte solution.

Further, the other additive includes, but is not limited to, one or more of vinylene carbonate, vinyl ethylene carbonate, biphenyl, succinic anhydride, glutaric anhydride, cyclohexylbenzene, tert-butylbenzene, tert-amylbenzene, meta-fluorotoluene, 3,4-difluorotoluene, p-fluorotoluene, p-xylene, 1,2-dimethoxy-4-nitrobenzene, N-phenylmaleimide, pentafluoroanisole, 1,4-dimethoxybenzene, adiponitrile, 1,3,6-hexanetricarbonitrile, succinonitrile, 1,2,3-tris(2-cyanoethoxy)propane, N,N-dicyclohexylcarbodiimide, N,N-diethylamine trimethylsilane, hexamethyldisilazane, triphenyl phosphate, pimelonitrile, 2-ethoxy-2,4,4,6,6- pentafluorocyclotriphosphazene, 2-fluoropyridine, and 1,3-dioxane.

According to a specific and preferred embodiment, the other additive is vinylene carbonate accounting for 1% of the total mass of the electrolyte solution.

According to some embodiments, the organic solvent further includes other organic solvent. The other organic solvent comprises one or more of a carbonate, a carboxylic ester and an ether; or, the other organic solvent is a combination of one or more of a carbonate, a carboxylic ester and an ether and one or more of a fluorocarbonate, a fluorocarboxylate, a fluoroether and a fluorobenzene.

Further, the other organic solvent is difluoroethylene carbonate, trifluoroethyl carbonate, tetrafluoroethyl tetrafluoropropyl ether, trifluoroethyl hexafluoropropyl ether, dimethyl carbonate, diethyl carbonate, ethylene carbonate, propylene carbonate, ethyl methyl carbonate, ethylene glycol dimethyl ether, r-butyrolactone, methyl acetate, ethyl acetate, propyl acetate, butyl acetate, methyl propionate, propyl propionate, butyl propionate, methyl butyrate, ethyl butyrate, fluorobenzene or a combination thereof.

According to some embodiments, the content of the organic solvent is 70% to 90% of the total mass of the electrolyte solution.

Preferably, the content of the organic solvent is 80% to 90% of the total mass of the electrolyte solution.

The amount of fluoroethylene carbonate used is related to the anode of the battery system in which the electrolyte is used, and the proportion of the fluoroethylene carbonate in the organic solvent increases with the increase of a silicon content in an anode material. For example, the mass of the fluoroethylene carbonate is less than 90%, less than 80%, less than 70%, less than 60%, less than 50%, less than 40%, less than 30%, less than 20% and the like of the mass of the organic solvent.

According to some embodiments, the lithium salt can be any lithium salt or combination thereof that can be used in lithium-ion battery systems.

According to some embodiments, the content of the lithium salt is 10% to 25% of the total mass of the electrolyte solution.

Further, the content of the lithium salt is 12% to 20% of the total mass of the electrolyte solution.

According to some embodiments, the lithium salt comprises lithium hexafluorophosphate and other lithium salt.

Further, the other lithium salt is lithium tetrafluoroborate, lithium dioxalate borate, lithium oxalate difluoroborate, lithium difluorophosphate, lithium bisoxalatodifluorophosphate, lithium tetrafluoro(oxalato)phosphate or a combination thereof.

Further, the content of the lithium hexafluorophosphate is 10% to 15% of the total mass of the electrolyte solution.

More further, the content of the lithium hexafluorophosphate is 10% to 13% of the total mass of the electrolyte solution.

According to a specific and preferred embodiment, the lithium salt comprises lithium hexafluorophosphate accounting for 12.5% of the total mass of the electrolyte solution, and lithium tetrafluoroborate accounting for 0.5% of the total mass of the electrolyte solution.

Another aspect of the present invention is to provide a lithium-ion secondary battery, including a housing, and a battery cell and an electrolyte solution contained in the housing.

Specifically, the battery cell includes a cathode, an anode, and a separator placed between the cathode and the anode, and the electrolyte solution is the lithium-ion battery electrolyte solution described above.

Specifically, the cathode includes a cathode current collector and a cathode material located on a surface of the cathode current collector. The cathode material comprises a cathode active material, a cathode conductive agent, and a cathode binder. The cathode active material may be ordinary LiNiₓCo_{y}Mn_{1-x-y}O₂, ordinary LiNiₓCo_{y}Al_{1-x-y}O₂, ordinary LiCoO₂, high-voltage LiNiₓCo_{y}Mn_{1-x-y}O₂, (0<x<1,0<y<1) and high-voltage LiCoO₂. The cathode conductive agent is acetylene black or carbon nanotubes, and the cathode binder is polyvinylidene fluoride.

Specifically, the anode includes an anode current collector and an anode material located on a surface of the anode current collector. The anode material comprises an anode active material and an anode binder. The anode material may also optionally comprise an anode conductive agent. The anode conductive agent may or may not be the same as the cathode conductive agent. The anode conductive agent and the cathode conductive agent are both conductive agents commonly used in the art. The anode active material and anode binder may be an anode active material and anode binder conventionally used in the art. For example, the anode active material may include one or more of metallic lithium, metal oxide, lithium-aluminum alloy, graphite, modified carbon material, silicon, silicon oxide, and silicon carbon. Preferably, the anode active material is a composite of graphite and a silicon oxide.

Specifically, the separator is a separator layer conventionally used in the art.

Due to the application of the described technical solution, the present disclosure has the following advantages compared with the prior art:

When the electrolyte solution comprises fluoroethylene carbonate and the content of fluoroethylene carbonate is greater than 5% of the total mass of the electrolyte solution, instead of using a sulfonyl-containing compound (such as sulfonic esters, sultones, sulfates, sulfites, sulfones, and sulfoxides) as an additive, the electrolyte solution uses a compound having three or more carbon-carbon double bonds as an additive, which is more environmentally friendly and can ameliorate swelling of batteries during formation and high-temperature storage, increase the discharge capacity of batteries, and improve the self-discharge performance of batteries at a high voltage.

### Detailed Description of the Invention

With the expansion of lithium battery application scenarios and the improvement of environmental protection requirements, it is desired to improve electrolyte solutions for lithium-ion secondary batteries to suppress the swelling of the batteries during formation and high-temperature storage, increase the discharge capacity of batteries, and improve the self-discharge performance of batteries at a high voltage. Therefore, after in-depth research and a large number of experiments, the inventors of the present disclosure finally provide an electrolyte solution and a lithium-ion secondary battery using the same.

The present disclosure is further described below in conjunction with embodiments. However, the present disclosure is not limited to the following embodiments. The implementation conditions used in the embodiments may be further adjusted according to the different requirements of specific use, and the implementation conditions not specified herein are conventional conditions in this industry. The technical features involved in various embodiments of the present disclosure may be combined with each other as long as they do not conflict with each other. Unless otherwise stated herein, "%" represents a percent by mass.

### Preparation of electrolyte solutions:

In specific embodiments of the present disclosure, battery electrolyte solutions were prepared in a glove box according to the formulations described in Table 1. The names of substances listed in the table are ethylene carbonate (EC), diethyl carbonate (DEC), ethyl methyl carbonate (EMC), fluoroethylene carbonate (FEC), lithium hexafluorophosphate (LiPF₆), lithium tetrafluoroborate (LiBF₄), 1,3-propane sultone (PS), sulfolane (SL), propenyl-1,3-sultone (PST), methylene methane disulfonate (MMDS), and vinylene carbonate (VC). The formulations of electrolyte solutions in Comparative Examples 1 to 8 and Examples 1 to 21 are shown in Table 1.

**Table 1**

| | Solvent (wt%) | Electrolyte salt (wt%) | Additive | Other additive (wt%) |
|---|---|---|---|---|
| Comparative Example 1 | 22%EC | | / | |
| | 17%DEC | | | |
| | 47%EMC | | | |
| Comparative Example 2 | 22%EC | | 2%PS | |
| | 17%DEC | | | |
| | 45%EMC | | | |
| Comparative Example 3 | 20%EC | | / | |
| | 15%DEC | | | |
| | 43%EMC | | | |
| | 8%FEC | | | |
| Comparative Example 4 | 20%EC | | 2%PS | |
| | 15%DEC | | | |
| Comparative Example 5 | 41%EMC | | 2%SL | |
| | 8%FEC | | | |
| Comparative Example 6 | 20%EC | | 1%PST | |
| Comparative Example 7 | 15%DEC | | 1%MMDS | |
| | 42%EMC | | | |
| | 8%FEC | | | |
| Comparative Example 8 | 21%EC | | 1%A1 | |
| | 16%DEC | | | |
| | 46%EMC | | | |
| | 2%FEC | | | |
| Example 1 | 20%EC | | 1%Al | |
| Example 2 | | | 1%A2 | |
| Example 3 | | | 1%A3 | |
| Example 4 | 15%DEC | | 1%A4 | |
| Example 5 | 42%EMC | | 1%A5 | |
| Example 6 | 8%FEC | | 1%A6 | |
| Example 7 | | | 1%A7 | |
| Example 8 | | | 1%A8 | |
| Example 9 | 20%EC | | 0.5%A1 | |
| Example 10 | 15%DEC | | 0.5%A4 | |
| | 42.5%EMC | | | |
| Example 11 | 8%FEC | | 0.5%A6 | |
| Example 12 | 20%EC | 12.5%LiPF₆ | 1.5%A1 | 1%VC |
| Example 13 | 15%DEC | 0.5%LiBF₄ | 1.5%A4 | |
| | 41.5%EMC | | | |
| Example 14 | 8%FEC | | 1.5%A6 | |
| Example 15 | 20%EC | | 2.0%A1 | |
| | 15%DEC | | | |
| Example 16 | 41%EMC | | 2.0%A4 | |
| | 8%FEC | | | |
| Example 17 | | | 2.0%A6 | |
| Example 18 | 20%EC | | 1%A1+0.5%A4 | |
| | 15%DEC | | | |
| Example 19 | 41.5%EMC | | 1%A1+0.5%A6 | |
| | 8%FEC | | | |
| Example 20 | 20%EC | | 0.5%A4+0.5%A6 | |
| | 15%DEC | | | |
| | 42%EMC | | | |
| | 8%FEC | | | |
| Example 21 | 20%EC | | 1%A1+0.5%A4+ 0.5%A6 | |
| | 15%DEC | | | |
| | 41%EMC | | | |
| | 8%FEC | | | |
| Example 22 | 21%EC | | 1%A1 | |
| Comparative Example 9 | 16%DEC | | 1%PST | |
| | 43%EMC | | | |
| Comparative Example 10 | 5%FEC | | 1%MMDS | |
| Comparative Example 11 | 21%EC | | 2%PS | |
| Comparative Example 12 | 16%DEC | | 2%SL | |
| | 42%EMC | | | |
| | 5%FEC | | | |

Additives A1 to A8 listed in Table 1 are as follows:

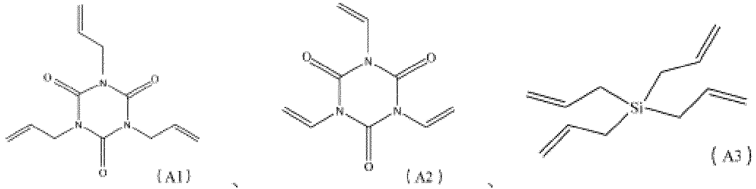

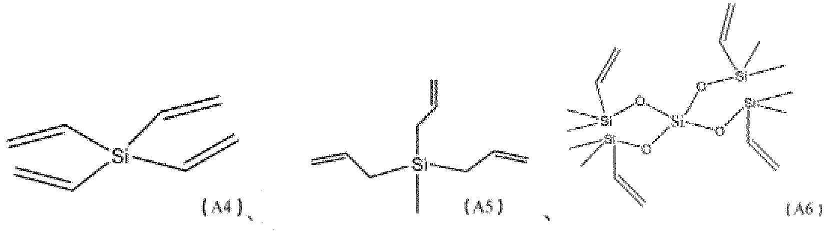

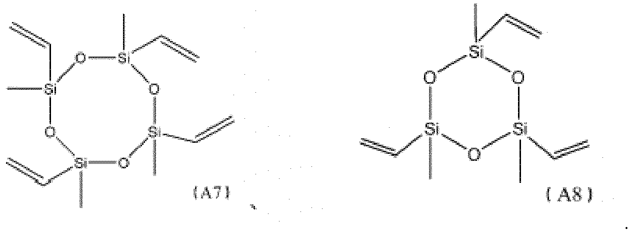

### Preparation of batteries

Electrolyte solutions obtained in Comparative Examples 1 to 8 and Examples 1 to 21 were injected into the same batch of LiNi_{0.8}Co_{0.1}Mn_{0.1}O₂(NCM811)∥SiO-C (500mAh) polymer pouch batteries and subjected to the following tests, respectively.
1) Formation experiment of batteries: The batteries were subjected to the first charge/discharge test at 0.1C in the range of 2.75V-4.3V, and the swelling rate H1% of the batteries was tested as (H1%=battery thickness after charge/discharge-battery thickness before charge/discharge)/battery thickness before charge/discharge)*100). See Table 2 for the experimental results.
2) After the test batteries which were fully charged at 4.3V were stored at 60°C for 7 days, the batteries were tested for swelling rate H2% (H2%=(thickness after shelving-thickness before shelving)/thickness before storage)*100), capacity retention rate Q% (Q%=discharge capacity after storage/discharge capacity before storage)*100), and current voltage value V. The experimental results are shown in Table 2.

**Table 2**

| | H1% | H2% | Q% | V |
|---|---|---|---|---|
| Comparative Example 1 | 35.42 | 26.63 | 82.75 | 4.181 |
| Comparative Example 2 | 30.33 | 21.48 | 85.03 | 4.188 |
| Comparative Example 3 | 31.57 | 22.50 | 84.41 | 4.192 |
| Comparative Example 4 | 24.21 | 15.29 | 87.33 | 4.206 |
| Comparative Example 5 | 27.93 | 19.06 | 86.40 | 4.197 |
| Comparative Example 6 | 24.86 | 15.73 | 87.68 | 4.207 |
| Comparative Example 7 | 26.90 | 17.67 | 86.92 | 4.201 |
| Comparative Example 8 | 26.54 | 16.53 | 87.56 | 4.205 |
| Example 1 | 20.58 | 12.33 | 93.37 | 4.238 |
| Example 2 | 21.37 | 13.15 | 92.46 | 4.231 |
| Example 3 | 22.55 | 13.72 | 91.84 | 4.228 |
| Example 4 | 21.20 | 13.24 | 92.11 | 4.234 |
| Example 5 | 23.64 | 14.12 | 90.53 | 4.218 |
| Example 6 | 20.92 | 12.61 | 93.06 | 4.235 |
| Example 7 | 22.85 | 13.84 | 91.15 | 4.225 |
| Example 8 | 22.37 | 13.56 | 91.79 | 4.221 |
| Example 9 | 22.06 | 13.52 | 92.03 | 4.229 |
| Example 10 | 20.73 | 12.43 | 93.62 | 4.241 |
| Example 11 | 20.40 | 11.82 | 93.81 | 4.243 |
| Example 12 | 22.14 | 13.68 | 91.88 | 4.224 |
| Example 13 | 21.72 | 13.37 | 92.56 | 4.230 |
| Example 14 | 21.48 | 13.32 | 92.72 | 4.229 |
| Example 15 | 22.53 | 13.69 | 91.34 | 4.227 |
| Example 16 | 22.86 | 13.81 | 91.27 | 4.224 |
| Example 17 | 22.27 | 13.50 | 91.68 | 4.226 |
| Example 18 | 19.82 | 10.88 | 94.24 | 4.242 |
| Example 19 | 19.43 | 10.79 | 94.15 | 4.245 |
| Example 20 | 20.14 | 11.25 | 93.92 | 4.244 |
| Example 21 | 19.01 | 10.63 | 94.50 | 4.248 |
| Example 22 | 25.73 | 15.02 | 87.72 | 4.205 |
| Comparative Example 9 | 25.49 | 16.85 | 86.66 | 4.205 |
| Comparative Example 10 | 26.82 | 17.58 | 85.72 | 4.202 |
| Comparative Example 11 | 25.33 | 16.18 | 87.01 | 4.205 |
| Comparative Example 12 | 31.28 | 21.97 | 85.14 | 4.192 |

Referring to the above table, in LiNi_{0.8}Co_{0.1}Mn_{0.1}O₂(NCM811)∥SiO-C (500mAh) 1Ah polymer pouch batteries, when the electrolyte solution comprises an organic solvent containing a high content (greater than or equal to 5 wt%) of fluoroethylene carbonate, a lithium salt, and an additive containing additive A (a compound having three or more carbon-carbon double bonds) (Examples 1 to 22), this electrolyte solution is more environmentally friendly and can ameliorate swelling of the batteries during formation and high-temperature storage, increase the discharge capacity of the batteries, and improve the self-discharge performance of the batteries at a high voltage as compared with an electrolyte solution comprising a sulfonyl-containing compound (such as a sulfonic ester, a sultone, sulfates, a sulfite, a sulfone, and a sulfoxide) as an additive (Comparative Examples 2, 4 to 7, and 9 to 12). As can be seen from the above table, when two or three additives A are used in combination (Examples 18 to 21), the batteries have lower swelling rate but higher capacity retention rate and higher voltage value.

The above embodiments are only to illustrate the technical concepts and characteristics of the invention, instead of limiting the scope of the invention, so that those familiar with the art could understand the contents of the invention and implement the invention accordingly. Any equivalent changes or modifications made according to the spirit of the invention shall fall within the scope of the invention.

## Claims

1. An electrolyte solution of a lithium-ion battery comprising an organic solvent, a lithium salt and an additive, **characterized in that**, the additive comprises an additive A which is selected from the group consisting of substances shown in the following structural formulas and combinations thereof: 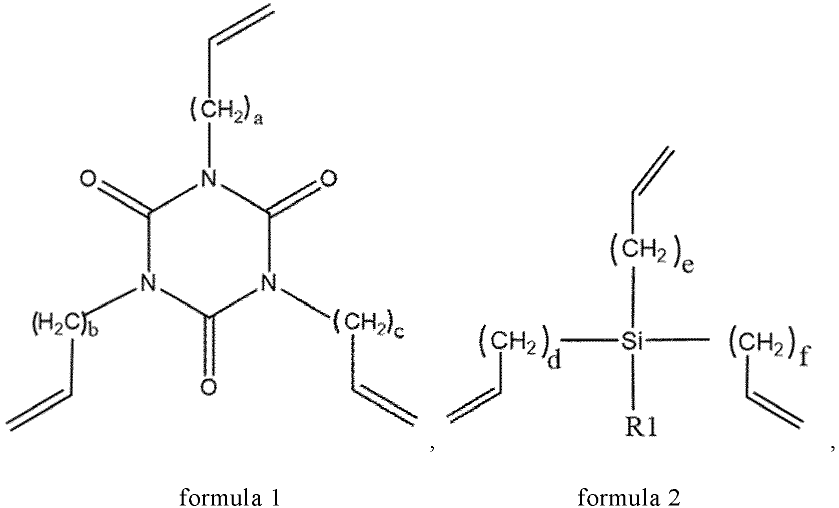 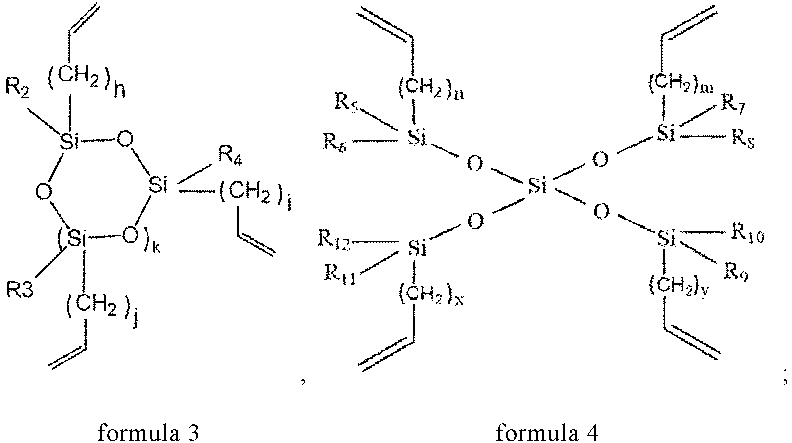
R₁ in formula 2 is an alkyl group with 1 to 3 carbon atoms or an alkenyl group with 2 to 4 carbon atoms, and R₂ to R₁₂ in formula 3 and formula 4 are alkyl groups with 1 to 3 carbon atoms; a to c in formula 1 are integers from 0 to 3, d to f in formula 2 are integers from 0 to 3, h to j in formula 3 are integers from 0 to 3, k in formula 3 is an integer from 1 to 5, and m, n, x, and y in formula 4 are integers from 0 to 3;
the organic solvent comprises fluoroethylene carbonate, the content of which is at least 5% of the total mass of the electrolyte solution;
the electrolyte solution does not comprise sulfonyl-containing compounds.

2. The electrolyte solution of a lithium-ion battery according to claim 1, **characterized in that**, R₁ in formula 2 is a methyl group, an ethyl group, a vinyl group, or a propenyl group; R₂ to R₁₂ in formulas 3 and 4 are methyl groups, ethyl groups or propyl groups; a to c in formula 1 are 0, 1 or 2; d to f in formula 2 are 0, 1 or 2; h to j in formula 3 are 0, 1 or 2; k in formula 3 is 1, 2 or 3; and m, n, x, and y in formula 4 are 0, 1 or 2.

3. The electrolyte solution of a lithium-ion battery according to claim 1, **characterized in that**, the additive A is selected from the group consisting of substances shown in the following structural formulas and combinations thereof:

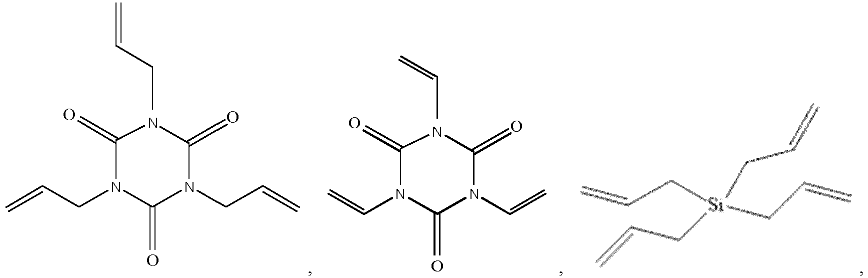

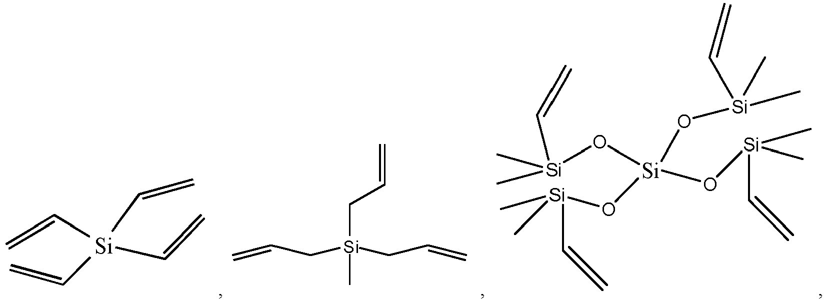

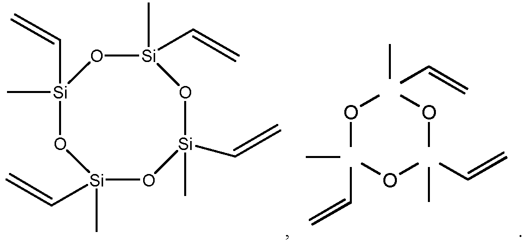

4. The electrolyte solution of a lithium-ion battery according to any one of claims 1 to 3, **characterized in that**, the content of the additive A is 0.5% to 2% of the total mass of the electrolyte solution.

5. The electrolyte solution of a lithium-ion battery according to claim 1, **characterized in that**, the additive also comprises other additive; the other additive is a cyclic carbonate having double bonds, a cyclic carbonate containing halogen, an acid anhydride, a benzene compound, a fluorobenzene compound, a nitrile compound, a phosphate ester, a phosphite ester, a boron compound, an amine compound, a silicon-containing compound, a heterocyclic compound or a combination thereof.

6. The electrolyte solution of a lithium-ion battery according to claim 5, **characterized in that**, the other additive is vinylene carbonate, vinyl ethylene carbonate, biphenyl, succinic anhydride, glutaric anhydride, cyclohexylbenzene, tert-butylbenzene, tert-amylbenzene, meta-fluorotoluene, 3,4-difluorotoluene, p-fluorotoluene, p-xylene, 1,2-dimethoxy-4-nitrobenzene, N-phenylmaleimide, pentafluoroanisole, 1,4-dimethoxybenzene, adiponitrile, 1,3,6-hexanetricarbonitrile, succinonitrile, 1,2,3-tris(2-cyanoethoxy)propane, N,N-dicyclohexylcarbodiimide, N,N-diethylamine trimethylsilane, hexamethyldisilazane, triphenyl phosphate, pimelonitrile, 2-ethoxy-2,4,4,6,6-pentafluorocyclotriphosphazene, 2-fluoropyridine 1,3-dioxane or a combination thereof.

7. The electrolyte solution of a lithium-ion battery according to claim 5, **characterized in that**, the content of the other additive is 0.1% to 5% of the total mass of the electrolyte solution.

8. The electrolyte solution of a lithium-ion battery according to claim 1, **characterized in that**, the organic solvent further comprises other organic solvent; the other organic solvent comprises one or more of a carbonate, a carboxylic ester and an ether; or, the other organic solvent is a combination of one or more of a carbonate, a carboxylic ester and an ether and one or more of a fluorocarbonate, a fluorocarboxylate, a fluoroether and a fluorobenzene.

9. The electrolyte solution of a lithium-ion battery according to claim 8, **characterized in that**, the other organic solvent is difluoroethylene carbonate, trifluoroethyl carbonate, tetrafluoroethyl tetrafluoropropyl ether, trifluoroethyl hexafluoropropyl ether, dimethyl carbonate, diethyl carbonate, ethylene carbonate, propylene carbonate, ethyl methyl carbonate, ethylene glycol dimethyl ether, r-butyrolactone, methyl acetate, ethyl acetate, propyl acetate, butyl acetate, methyl propionate, propyl propionate, butyl propionate, methyl butyrate, ethyl butyrate, fluorobenzene or a combination thereof.

10. The electrolyte solution of a lithium-ion battery according to claim 1, **characterized in that**, the content of the organic solvent is 70% to 90% of the total mass of the electrolyte solution.

11. The electrolyte solution of a lithium-ion battery according to claim 1, **characterized in that**, the lithium salt comprises lithium hexafluorophosphate and other lithium salt; the other lithium salt is lithium tetrafluoroborate, lithium dioxalate borate, lithium oxalate difluoroborate, lithium difluorophosphate, lithium bisoxalatodifluorophosphate, lithium tetrafluoro(oxalato)phosphate or a combination thereof.

12. The electrolyte solution of a lithium-ion battery according to claim 11, **characterized in that**, the content of the lithium hexafluorophosphate is 10% to 15% of the total mass of the electrolyte solution.

13. The electrolyte solution of a lithium-ion battery according to claim 1, **characterized in that**, the content of the lithium salt is 10% to 25% of the total mass of the electrolyte solution.

14. A lithium-ion secondary battery, **characterized in that**, the lithium-ion secondary battery comprises a housing, and a battery cell and an electrolyte solution contained in the housing; the battery cell comprises a cathode, an anode, and a separator placed between the cathode and the anode, and the electrolyte solution is the electrolyte solution of a lithium-ion battery according to any one of claims 1 to 13.
